(19) Europäisches Patentamt
European Patent Office
Office européen des brevets

(11) Veröffentlichungsnummer: **0 182 202**
A2

(12) # EUROPÄISCHE PATENTANMELDUNG

(21) Anmeldenummer: **85114113.5**

(22) Anmeldetag: **06.11.85**

(51) Int. Cl.⁴: **C 09 K 3/14**

(30) Priorität: **14.11.84 DE 3441596**

(43) Veröffentlichungstag der Anmeldung: **28.05.86 Patentblatt 86/22**

(84) Benannte Vertragsstaaten: **AT BE CH DE FR GB IT LI LU NL SE**

(71) Anmelder: **RIEDEL-DE HAEN AKTIENGESELLSCHAFT, Wunstorfer Strasse 40, D-3016 Seelze 1 (DE)**

(72) Erfinder: **Schönfeld, Bernd, Dr., Pappelweg 6, D-3052 Bad Nenndorf 2 (DE)**

(74) Vertreter: **Beck, Bernhard et al, HOECHST AKTIENGESELLSCHAFT Zentrale Patentabteilung Postfach 80 03 20, D-6230 Frankfurt/Main 80 (DE)**

(54) **Aktiver Füllstoff für Schleifscheiben.**

(57) Schleifaktive Füllstoffe sind ein wesentlicher Bestandteil von Schleifscheiben, die zum Trennschleifen von Materialien wie Metall, Kunststoff und Glas eingesetzt werden. Bekannte Füllstoffe sind vor allem Metallhalogenide. Besonders geeignet sind Gemische aus basischem Aluminiumchlorid und Natriumchlorid und/oder Kaliumchlorid. Solche Gemische lassen sich vor allem durch Sprühtrocknen aus wäßrigen Lösungen herstellen.

EP 0 182 202 A2

RIEDEL-DE HAEN AG HOE 84/D 003 Dr.EG/cr

Aktiver Füllstoff für Schleifscheiben

Die Erfindung betrifft einen aktiven Füllstoff für Schleifscheiben auf der Basis von Metallhalogeniden, Verfahren zur Herstellung dieses Füllstoffs und eine Füllstoff enthaltende Schleifscheibe.

Schleifscheiben, die zum Trennschleifen geeignet sind, bestehen üblicherweise aus einem spanabhebenden Schleifmittel, einem Trägermaterial (Bindemittel) und schleifaktiven Füllstoffen. Diese aktiven Füllstoffe dienen vor allem zur Aufnahme und Abführung der beim Schleifvorgang entstehenden Reibungswärme.

Eine Vielzahl von anorganischen Salzen wurde bereits für die Anwendung als aktiver Füllstoff vorgeschlagen, z.B. wasserfreie, wasserlösliche, nicht-oxidierende anorganische Alkali- oder Erdalkalisalze mit Schmelzpunkten zwischen 700 und 1200°C, insbesondere Natriumchlorid und Natriumcarbonat; die Menge des Füllstoffs beträgt dabei bis zu 40 Volumprozent, bezogen auf das Bindemittel (US-Patentschrift 2 216 135).

Ferner ist bekannt, daß Bleichlorid und Antimonsulfid sowie Alkalichloroferrate geeignete aktive Füllstoffe sind (europäische Patentschrift 8 697 = US-Patentschrift 4 263 016). Weitere schleifaktive Füllstoffe sind Metallhalogenide und Metallkomplexsalze, insbesondere Manganchloride, Mangankomplexsalze und Zinkkomplexsalze (europäische Anmeldungsschrift 70 520). Antimonsulfid wird auch in Kombination mit Alkalisalzen der Schwefelsäure, Salzsäure und Bromwasserstoffsäure verwendet, wobei die Menge des Füllstoffs etwa 5 bis 40 Volumprozent beträgt, bezogen auf das Bindemittel (US-Patentschrift 2 940 841).

Aufgabe der Erfindung ist nun die Bereitstellung eines aktiven Füllstoffs für Schleifscheiben, der preiswert, umweltfreundlich und einfach zu verarbeiten ist.

Die Erfindung betrifft einen aktiven Füllstoff für Schleifscheiben auf der Basis von Metallhalogeniden, der dadurch gekennzeichnet ist, daß er aus einem Gemisch aus 50 bis 95 Gewichtsprozent eines basischen Aluminiumchlorids und 50 bis 5 Gewichtsprozent Natriumchlorid oder Kaliumchlorid oder eines Gemisches aus Natriumchlorid und Kaliumchlorid besteht.

Ferner betrifft die Erfindung ein Verfahren zur Herstellung eines aktiven Füllstoffs für Schleifscheiben auf der Basis von Metallhalogeniden, das dadurch gekennzeichnet ist, daß eine wäßrige Lösung, die ein basisches Aluminiumchlorid und Natriumchlorid oder Kaliumchlorid oder ein Gemisch aus Natriumchlorid und Kaliumchlorid enthält, sprühgetrocknet wird.

Die Erfindung betrifft weiterhin eine Füllstoff enthaltende Schleifscheibe, die dadurch gekennzeichnet ist, daß der Füllstoff ein Gemisch aus 50 bis 95 Gewichtsprozent eines basischen Aluminiumchlorids und 50 bis 5 Gewichtsprozent Natriumchlorid oder Kaliumchlorid oder eines Gemisches aus Natriumchlorid und Kaliumchlorid ist.

Der erfindungsgemäße Füllstoff ist ein homogenes, feines Pulver. Die Korngröße (Partikeldurchmesser) der Füllstoff-Komponenten liegt zu 90 Prozent unterhalb von 40 µm (Siebanalyse). Von besonderem Vorteil ist der Füllstoff, wenn die Korngrößen seiner Komponenten weitgehend gleich sind.

Das basische Aluminiumchlorid wird vorteilhafterweise durch elektrochemische Umsetzung von Aluminium mit Salzsäure hergestellt, und zwar durch Anlegen von Gleichstrom an Aluminiumelektroden, die in wäßrige Chlorwasserstofflösung eintauchen; dadurch wird das Aluminium ohne Chlor- und Sauerstoffbildung anodisch aufgelöst unter Bildung des basischen Aluminiumchlorids (deutsche Patentschrift 1 174 751 = US-Patentschrift 3 240 687). Besonders geeignet ist ein Aluminiumchlorid der Formel

$$Al_2(OH)_mCl_n(H_2O)_x,$$

wobei m eine Zahl von 3 bis 5, n eine Zahl von 1 bis 3, die Summe (m+n) gleich 6 und x 2 bis 3 ist.

Als zweiten Bestandteil enthält der erfindungsgemäße Füllstoff Natriumchlorid oder Kaliumchlorid oder ein Gemisch aus Natriumchlorid und Kaliumchlorid. Das letztgenannte Gemisch besteht aus 10 bis 90 Gewichtsprozent Natriumchlorid und 90 bis 10 Gewichtsprozent Kaliumchlorid, vorzugsweise aus 40 bis 60 Gewichtsprozent Natriumchlorid und 60 bis 40 Gewichtsprozent Kaliumchlorid.

Der Füllstoff ist zusammengsetzt aus 50 bis 95 Gewichtsprozent des basischen Aluminiumchlorids und 50 bis 5 Gewichtsprozent Natriumchlorid oder Kaliumchlorid oder eines Natriumchlorid/Kaliumchlorid-Gemisches. Vorzugsweise besteht der Füllstoff aus 60 bis 85 Gewichtsprozent des basischen Aluminiumchlorids und 40 bis 15 Gewichtsprozent Natriumchlorid oder Kaliumchlorid oder eines Natriumchlorid/Kaliumchlorid-Gemisches.

Die Herstellung des erfindungsgemäßen Füllstoffes erfolgt vorteilhafterweise durch Sprühtrocknung einer wäßrigen Lösung von basischem Aluminiumchlorid und Natriumchlorid oder Kaliumchlorid oder eines Natriumchlorid/Kaliumchlorid-Gemisches. Dabei liegt die Gesamtkonzentration der genannten Salze in der Lösung im Bereich von 10 bis 50, vorzugsweise von 20 bis 30 Gewichtsprozent. Die Sprühtrocknung wird mit Hilfe eines handelsüblichen Sprühtrockners durchgeführt; die Eintrittstemperatur beträgt 250 bis 350°C, die Austrittstemperatur 100 bis 150°C und die Verweilzeit 4 bis 6 Sekunden. Die Düsenscheibe des Sprühtrockners hat einen Durchmesser von 12 bis 15 cm, und die Scheibe rotiert mit einer Umdrehungszahl von 13 000 bis 20 000 Umdrehungen pro Minute.

Besonders wirtschaftlich ist die Sprühtrocknung einer Lösung, die erhalten wurde durch Umsetzung von Natriumaluminat oder Kaliumaluminat oder eines Natriumaluminat/-Kaliumaluminat-Gemisches mit Aluminiumchlorid in wäßriger Lösung bei einem pH-Wert von 3,5 bis 4,5 und bei einer Temperatur von 90 bis 100°C. Zur gezielten Einstellung einer bestimmten Zusammensetzung kann der Lösung vor der Sprühtrocknung noch basisches Aluminiumchlorid oder Natriumchlorid oder Kaliumchlorid zugesetzt werden.

Der erfindungsgemäße Füllstoff eignet sich als aktiver Füllstoff für Schleifscheiben. Diese enthalten als Schleifmittel üblicherweise kristallines Aluminiumoxid (Korund) oder auch Siliciumcarbid oder Borcarbid. Als Trägermaterial und Bindemittel dient ein hitzehärtbares Polykondensationsharz, insbesondere ein Phenoplast oder ein Aminoplast, z.B. ein Phenol/Formaldehyd-Harz, ein Harnstoff/Formaldehyd-Harz oder ein Melamin/Formaldehyd-Harz mit einem Schmelzbereich von 90 bis 110°C. Die kunstharzgebundene Schleifscheibe ist üblicherweise zusammengesetzt aus 50 bis 85, vorzugsweise 60 bis 75 Gewichtsprozent eines Schleifmittels, 10 bis 25, vorzugsweise 15 bis 20 Gewichtsprozent eines Bindemittels und 5 bis 25, vorzugsweise 10 bis 20 Gewichtsprozent eine aktiven Füllstoffs. Sie ist besonders geeignet zum Trennen von Metallen, Kunststoffen und Gläsern.

Die kunstharzgebundenen Schleifscheiben werden in bekannter Weise in einem Preßverfahren hergestellt. Dazu wird aus den jeweils benötigten Komponenten eine rieselfähige, homogene, verformbare Masse hergestellt, und diese Masse wird in einer geschlossenen Form einem Druck ausgesetzt, der je nach dem angestrebten Härtegrad zwischen 20 und 500 bar liegt. Der Preßvorgang erfolgt mit Hilfe von handelsüblichen Preßautomaten. Nach dem Pressen werden die erhaltenen Schleifscheiben getrocknet; die Trocknungstemperatur beträgt je nach Scheibengröße 150 bis 180°C.

Die erfindungsgemäßen Schleifscheiben zeigen gute Schnittqualitäten; ihre Durchmesserverluste pro Schnitt, ihre spezifischen Trennleistungen (= Abnahme des Werkstücks pro Zeiteinheit) und ihre Leistungsfaktoren (= Quotient aus Abnahme des Werkstücks und Abnahme des Scheibenquerschnitts) entsprechen denjenigen von handelsüblichen Trennscheiben, die Bleichlorid als Füllstoff enthalten (z.B. Trennschleifscheibe (R)PFERD 100 T 600-6 A 24 SG der Firma August Rüggeberg, D-5277 Marienheide). Sie sind jedoch durch eine wesentlich erhöhte Sprenggeschwindigkeit ausgezeichnet.

Die folgenden Beispiele dienen zur näheren Erläuterung der Erfindung. Prozentangaben beziehen sich jeweils auf das Gewicht.

Beispiel 1

In einem Rührkessel mit einem Volumen von 3 $m^3$ wurden 150 kg technisches Natriumaluminat (54 % $Al_2O_3$, 41 % $Na_2O$) in 1,5 $m^3$ Wasser gelöst. Mit der erhaltenen Lösung wurden 550 kg einer 27prozentigen wäßrigen Aluminiumchloridlösung verrührt. Die resultierende dünnflüssige Suspension wurde mit Dampf auf 100°C erhitzt, und die danach erhaltene fast klare Lösung, die einen pH-Wert von 4 aufwies, wurde in einem handelsüblichen Sprühtrockner getrocknet (Eintrittstemperatur 300°C; Austrittstemperatur 120°C; Verweilzeit 5 Sekunden; Düsenscheibendurchmesser 160 cm; Rotationsgeschwindigkeit der Scheibe 13 000 Umdrehungen pro Minute). Es wurden 415 kg eines feinpulvrigen Produktes erhalten, das sich zu 72 Prozent aus basischem Aluminiumchlorid und zu 28 Prozent aus Natriumchlorid zusammensetzte. Die Siebanalyse ergab folgende Rückstände: 0,9 Prozent bei 160 µm; 1,1 Prozent bei 125 µm; 1,2 Prozent bei 100 µm; 2,2 Prozent bei 80 µm; 3,4 Prozent bei 63 µm; 9,2 Prozent bei 40 µm.

Beispiel 2

Beispiel 1 wurde wiederholt, wobei zusätzlich 80 kg Kaliumchlorid in der nach dem Erhitzen erhaltenen Lösung mit einem pH-Wert von 4 gelöst wurden. Es wurden 495 kg eines feinpulvrigen Produktes erhalten, das aus 60,5 Prozent basischem Aluminiumchlorid, 23,5 Prozent Natriumchlorid und 16 Prozent Kaliumchlorid bestand. Die Siebanalyse ergab einen Rückstand von 8,5 Prozent bei 40 µm.

Beispiel 3

Beispiel 1 wurde wiederholt, wobei zusätzlich 200 kg basisches Aluminiumchlorid in der nach dem Erhitzen erhaltenen Lösung mit einem pH-Wert von 4 gelöst wurden. Es wurden 615

kg eines feinpulvrigen Produktes erhalten, das aus 81 Prozent basischem Aluminiumchlorid und 19 Prozent Natriumchlorid bestand. Die Siebanalyse ergab einen Rückstand von 7,8 Prozent bei 40 µm.

Beispiel 4

a) Unter Verwendung eines Gemisches aus 20 Prozent eines handelsüblichen Phenol-Formaldehyd-Harzes mit einem Schmelzbereich von 110 bis 120°C, 70 Prozent Korundpulver und 10 Prozent des nach Beispiel 1 erhaltenen Füllstoffs wurden gleichartige Schleifscheiben mit einem Durchmesser von 60 cm, einer Dicke von 7,5 mm und einem Gewicht von 5 kg hergestellt (Schleifscheibe PFERD 100 T 600-6 A 24 SG, bleifrei). Zum Vergleich wurden entsprechende Scheiben unter Verwendung eines Gemisches aus 10 Prozent Phenol-Formaldehyd-Harz, 70 Prozent Korundpulver und 20 Prozent Bleichlorid gefertigt (Schleifscheibe PFERD 100 T 600-6 A 24 SG, bleihaltig).

b) Jeweils eine der nach a) hergestellten verschiedenen Scheiben wurde auf einer handelsüblichen Schleifmaschine mit steigender Umfangsgeschwindigkeit solange in Rotation versetzt, bis sie zersprang. Die jeweils höchste Umfangsgeschwindigkeit ist unter "Sprenggeschwindigkeit" in der nachstehenden Tabelle aufgeführt.

c) Jeweils eine der nach a) hergestellten verschiedenen Scheiben wurde zum Trennschleifen von stabförmigen Werkstücken mit quadratischem Querschnitt (10 cm x 10 cm) aus für Prüfzwecke standardisiertem Baustahl "CK 45 normalisiert" eingesetzt. Die Schnitte wurden senkrecht zur Längsachse des jeweiligen Werkstücks durchgeführt, wobei die Umfangsgeschwindigkeit jeweils 100 m/s und die Leistungsaufnahme der Schleifmaschine jeweils 125 A betrug. Nach einer bestimmten Anzahl von Schnitten wurden Durchmesserverlust, spezifische Trennleistung und Leistungsfaktor ermittelt. Die jeweils ermittelten Werte sind in der folgenden Tabelle zusammengestellt.

Tabelle

| Füllstoff | Bleichlorid | gemäß Beispiel 1 |
|---|---|---|
| Sprenggeschwindigkeit (m/s) | 150 | 170 |
| Scheibendurchmesser (mm) vor dem Trennschleifen | 610 | 609 |
| Durchmesserverlust (mm) | | |
| nach 5 Schnitten | 15 | 15 |
| nach 10 Schnitten | 32 | 31 |
| nach 15 Schnitten | 51 | 49 |
| nach 20 Schnitten | 72 | 71 |
| nach 25 Schnitten | 97 | 93 |
| nach 30 Schnitten | 123 | 119 |
| nach 35 Schnitten | 154 | 147 |
| Spezifische Trennleistung ($cm^2/s$) | 7,1 | 7,2 |
| Leistungsfaktor ($cm^2/cm^2$) | 2,7 | 2,8 |

Patentansprüche:

1. Aktiver Füllstoff für Schleifscheiben auf der Basis von Metallhalogeniden, dadurch gekennzeichnet, daß er aus einem Gemisch aus 50 bis 95 Gewichtsprozent eines basischen Aluminiumchlorids und 50 bis 5 Gewichtsprozent Natriumchlorid oder Kaliumchlorid oder eines Gemisches aus Natriumchlorid und Kaliumchlorid besteht.

2. Füllstoff nach Anspruch 1, dadurch gekennnzeichnet, daß das basische Aluminiumchlorid eine Verbindung der Formel

$$Al_2(OH)_mCl_n(H_2O)_x,$$

wobei m eine Zahl von 3 bis 5, n eine Zahl von 1 bis 3, die Summe (m+n) gleich 6 und x 2 bis 3 ist.

3. Füllstoff nach Anspruch 1, dadurch gekennzeichnet, daß das Gemisch aus Natriumchlorid und Kaliumchlorid ein Gemisch aus 10 bis 90 Gewichtsprozent Natriumchlorid und 90 bis 10 Gewichtsprozent Kaliumchlorid ist.

4. Füllstoff nach Anspruch 1, dadurch gekennzeichnet, daß die Korngrößen seiner Komponenten weitgehend gleich sind.

5. Füllstoff nach Anspruch 1, dadurch gekennzeichnet, daß er hergestellt wurde durch Sprühtrocknen einer wäßrigen Lösung, die ein basisches Aluminiumchlorid und Natriumchlorid, Kaliumchlorid oder ein Gemisch aus Natriumchlorid und Kaliumchlorid enthält.

6. Verfahren zur Herstellung eines aktiven Füllstoffs für Schleifscheiben auf der Basis von Metallhalogeniden,

dadurch gekennzeichnet, daß eine wäßrige Lösung, die ein basisches Aluminiumchlorid und Natriumchlorid, Kaliumchlorid oder ein Gemisch aus Natriumchlorid und Kaliumchlorid enthält, sprühgetrocknet wird.

7. Verfahren zur Herstellung eines aktiven Füllstoffs für Schleifscheiben auf der Basis von Metallhalogeniden, dadurch gekennzeichnet, daß Natriumaluminat oder Kaliumaluminat oder ein Gemisch aus Natriumaluminat und Kaliumaluminat in wäßriger Lösung bei einem pH-Wert von 3,5 bis 4,5 bei einer Temperatur von 90 bis 100°C mit Alumiumchlorid umgesetzt wird und die erhaltene Lösung sprühgetrocknet wird.

8. Füllstoff enthaltende Schleifscheibe, dadurch gekennzeichnet, daß der Füllstoff ein Gemisch aus 50 bis 95 Gewichtsprozent eines basischen Aluminiumchlorids und 50 bis 5 Gewichtsprozent Natriumchlorid, Kaliumchlorid oder eines Gemisches aus Natriumchlorid und Kaliumchlorid ist.